# EUROPEAN PATENT APPLICATION

(11) **EP 3 744 181 A1**
(43) Date of publication of application: **02.12.2020**
(21) Application number: 19777901.0
(22) Date of filing: 26.03.2019
(51) Int. Cl.: A23G 1/32, A23G 1/48, A23G 1/50, A23G 1/52

(54) **PLANT-CONTAINING SOLID FAT COMPOSITION, METHOD FOR PRODUCTION THEREOF, AND METHOD FOR IMPROVING APPEARANCE AND TASTE**

(30) Priority: 27.03.2018 JP 2018060056
(71) Applicant: Mizkan Holdings Co., Ltd., Handa-shi, Aichi 475-8585 (JP)
(72) Inventor: HIGUCHI, Tatsuya, Handa-shi, Aichi 475-8585 (JP); TAGUCHI, Hideaki, Handa-shi, Aichi 475-8585 (JP)
(74) Representative: Mewburn Ellis LLP
(86) International application number: PCT/JP2019/012643
(87) International publication number: WO 2019/189047

(57) **Abstract**

A plant-containing solid fat composition containing a finely ground plant material. The invention provides a technique for improving appearance free from unevenness accompanied by crystallization of the solid fat in the course of hardening, and imparting an excellent taste.

To subjecting plant particles to a fine grinding in the presence of a solid fat liquefied with heating until an average particle diameter of the plant particles reaches 25 µm or less, and then hardening the solid fat by cooling.

## Description

### Technical Field

The present invention relates to a plant-containing solid fat composition, a method for producing the same, and a method for improving appearance and taste.

### Background Art

Some products prepared by using hardened solid fat can include various materials in the solid fat. For example, cocoa mass may be added to a cocoa butter of chocolate, a powder material containing a pigment or an aroma component may be added to a soap made from palm oil.

However, in these cases, there has been a problem that the post-hardening appearance of the solid fat is deteriorated, such as overall whitening or a topical mottle. These phenomena are different from fat bloom which can be caused by migration of a part of crystals of the solid fat to the surface after re-hardening of a hardened and melted solid fat.

The mechanism of the above phenomena can be as follows. Crystallization of solid fat progresses in the course of melting by warming and re-hardening by cooling the solid fat. Due to the presence of added materials, the crystals of the solid fat tend to exclude the added materials, and the added materials migrate to the surface to cause color shade, or the added materials topically gather to cause unevenness.

In order to suppress the above phenomena, a process called conching (kneading) is known. The conching facilitates mixing the solid fat and the added materials well, and the phenomena as described above are less likely to occur in the course of cooling. However, the conching requires a long time, at least 12 hours, and on average 24 hours, which is very burdensome.

When one encounter the phenomena, the issue is that the hardened solid fat must be heated to melt again to reconstitute it, and further the subsequent tempering (e.g., stabilization of the crystalline state of the solid fat by changing temperature from 42°C to 29°C, and from 29°C to 32°C in cocoa butter) needs to be performed again.

The purpose of conching is to homogenize the solid fat. If a material other than the solid fat is added, such phenomena cannot be reliably prevented even if its occurrence can be reduced.

To address the above issues, Patent Literature 1 discloses a chocolate containing finely ground spice, and a process for producing a chocolate including a step (1) of conching a chocolate dough and a step (2) of mixing the chocolate dough with a finely ground spice after the latter half or after the end of the step (1). However, in this method, however finely the spices are ground, the spices are not so miscible with a solid fat. As such, this method was not sufficient as a means for suppressing the occurrence of the phenomena.

Similarly, Patent Literature 2 discloses a method for preparing chocolate by jet-milling or ultra-high pressure bombardment of solid particles in chocolate raw materials to prepare particles of 15 µm or less (the majority of which is 10 µm or less), and adding an emulsifier, especially sucrose erucic acid ester or polyglycerol condensed ricinoleic acid ester, to improve the processability thereof. However, even if the solid matter is ultra-finely ground and the emulsifier is added to improve the miscibility with fat/oil, the emulsifier per se has a different property from that of the solid fat which can cause crystals upon hardening. Therefore, this was not a reliable means for suppressing the occurrence of the phenomena.

Patent Literature 3 discloses a technique for providing a confectionery product containing at least a part of non-cereal vegetable solids and solid fat wherein the non-cereal vegetable solids are present in the form of particles in an amount of at least 15 weight% of the total weight confectionery product and the non-cereal vegetable solids are mixed in a continuous phase of fat to provide a shaped fat-based product, as a means for providing a new plant-containing nutritional confectionery product attractive in taste, texture and/or color for children. However, the particle size of the vegetable solid which seems to be related to the solution of this issue is limited only to the notation that 80 µm or less, preferably 40 µm or less, more preferably 30 µm or less contributes to the maintenance of the texture similar to chocolate, and the issue that the appearance of the solid fat after hardening becomes poor accompanying the occurrence of the above phenomena is not mentioned, and the particle size of the vegetable solid is not measured in the examples nor is any relation with the improvement of the appearance of the confectionery product mentioned at all, and it was not a means for suppressing the occurrence of the above phenomena, either.

### Citations

### Patent Literatures

[Patent Literature 1] JP-A-2007-189902
[Patent Literature 2] JP-A-hei 6-343391
[Patent Literature 3] JP-A 2001-69919

### Summary of Invention

### Technical Problem

The present invention relates to a plant-containing solid fat composition containing a finely ground plant material. The object of the present invention is to provide a technique for improving the appearance without unevenness and imparting excellent taste in accordance with the progress of crystallization of the solid fat in the course of hardening of the solid fat.

### Solution to Problem

The present inventors intensively studied to overcome the above-mentioned problems in the conventional techniques.

As a result, the present inventors found that a plant-containing solid fat composition containing a finely ground plant material with improved appearance and taste are obtained by finely grinding the plant particles in the presence of a solid fat liquefied under warming until a mean particle size of the plant particles is 25 µm or less, followed by hardening the solid fat by cooling, thereby completing the present invention.

That is, the present invention relates to the following [1] to [14].
[1] A method for producing a plant-containing solid fat composition comprising a finely ground plant material in a solid fat, the method comprising:
   subjecting plant particles to a fine grinding in the presence of a solid fat liquefied with heating until an average particle diameter of the plant particles reaches 25 µm or less, and then hardening the solid fat by cooling.
[2] The method according to [1], wherein a surface of the finely ground plant material is coated with the solid fat and a surface layer of the finely ground plant material is infiltrated by the solid fat, by the fine grinding.
[3] The method according to [1] or [2], wherein a ratio of the finely ground plant material to a total of the solid fat and the finely ground plant material is 15 mass% or more and 85 mass% or less.
[4] The method according to any one of [1] to [3], wherein the fine grinding is performed by a wet bead mill treatment and/or a roll mill treatment.
[5] The method according to any one of [1] to [4], wherein the solid fat is one or more selected from the group consisting of cocoa butter, coconut oil, palm oil, palm kernel oil, beef tallow, ghee, lard, and butter.
[6] The method according to any one of [1] to [5], wherein water is added to a mixture of the finely ground plant material after the fine grinding and the liquefied solid fat, followed by homogenization, then the solid fat is hardened by a freeze-drying treatment.
[7] The method according to [6], wherein an amount of water added based on a total of the solid fat and the finely ground plant material is 10 mass% or more and 60 mass% or less.
[8] The method according to [6] or [7], wherein the solid fat is hardened by the freeze-drying treatment so as to form a porous structure.
[9] A plant-containing solid fat composition produced by the method according to any one of [1] to [8].
[10] A plant-containing solid fat composition, wherein a surface of a finely ground plant material having an average particle diameter of 25 µm or less is coated with a solid fat and a surface layer of the finely ground plant material is infiltrated by the solid fat.
[11] The plant-containing solid fat composition according to [10], wherein a ratio of the finely ground plant material to a total of the solid fat and the finely ground plant material is 15 mass% or more and 85 mass% or less.
[12] The plant-containing solid fat composition according to [10] or [11], which has a porous structure.
[13] A method for improving an appearance and taste of a plant-containing solid fat composition comprising a finely ground plant material in a solid fat, the method comprising:
   subjecting plant particles to a fine grinding in the presence of a solid fat liquefied with heating until an average particle diameter of the plant particles reaches 25 µm or less, and then hardening the solid fat by cooling.
[14] The method according to [13], wherein a surface of a finely ground plant material is coated with the solid fat and a surface layer of the finely ground plant material is infiltrated by the solid fat, by the fine grinding.

### Advantageous Effect of Invention

The present invention relates to a plant-containing solid fat composition comprising a finely ground plant material. The present invention provides a technique for improving appearance free from unevenness accompanied by crystallization of the solid fat in the course of hardening, and imparting an excellent taste.

### Brief Description of Drawings

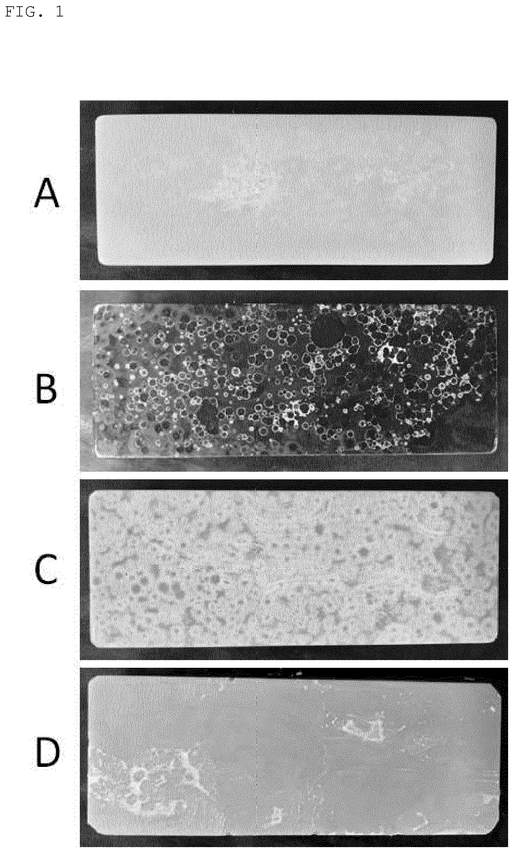

Fig. 1 illustrates photographs, with reference to Example 1, of outer surfaces (appearance, each 4 cm × 10 cm) of (A) a solid fat composition prepared in Comparative Example 1, (B) a plant-containing solid fat composition prepared in Comparative Example 2, (C) a solid fat composition containing a finely dry ground plant material prepared in Comparative Example 3, and (D) a solid fat composition containing a finely wet ground plant material in vegetable oil prepared in Test Example 1.

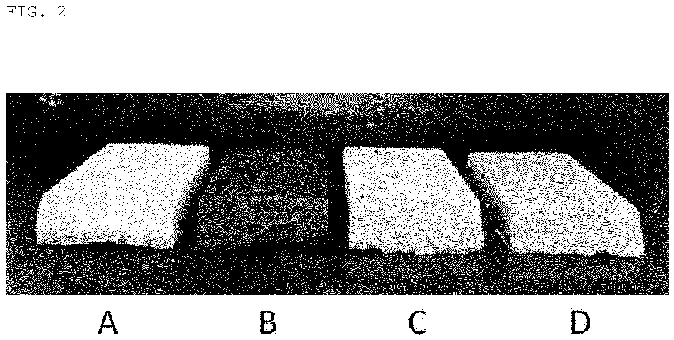

Fig. 2 illustrates photographs of the same, of inner surfaces (cross-section, each 1.5 cm × 4 cm).

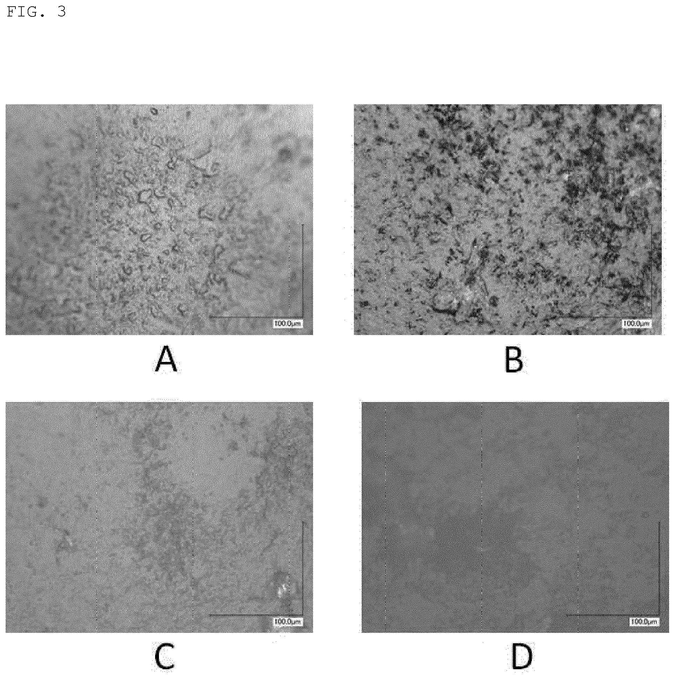

Fig. 3 illustrates photographs of the same, of an optical microscope observation of the outer surfaces (each 1000-fold) .

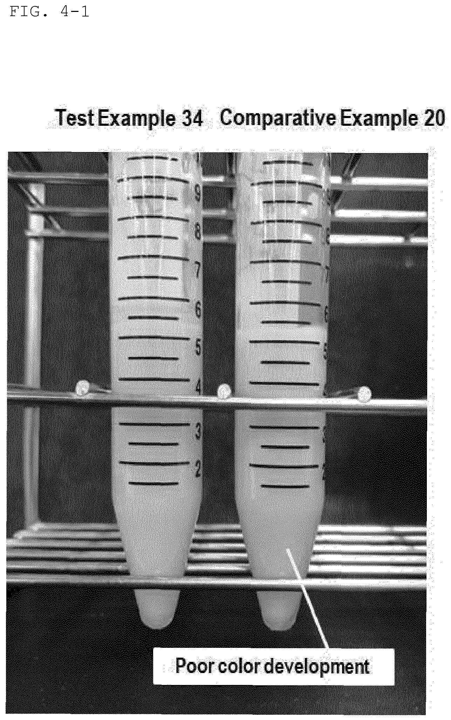

Fig. 4-1 illustrates a photograph of a liquid composition containing a finely wet (in oil) ground plant material prepared in Test Example 34 and a liquid composition containing a finely wet (in water) ground plant material prepared in Comparative Example 20, both prepared in Example 7, after left to stand for 96 hours at room temperature.

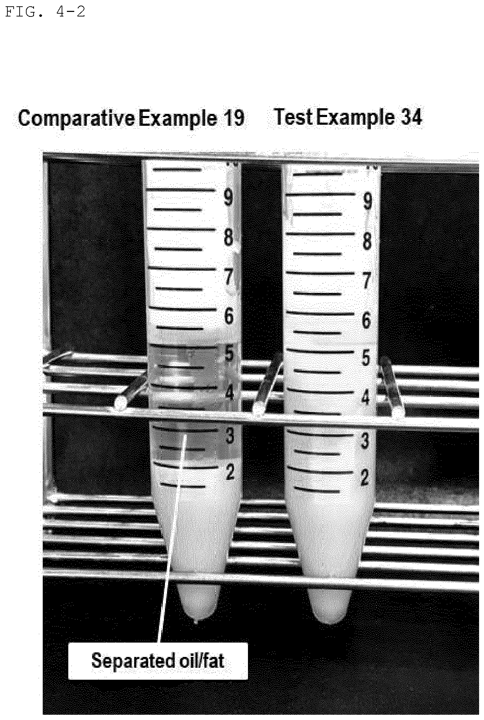

Fig. 4-2 illustrates a photograph of a liquid composition containing a finely wet (in oil) ground plant material of Test Example 34 and a liquid composition containing a finely dry ground plant material of Comparative Example 19, both prepared in Example 7, after left to stand for 96 hours at room temperature.

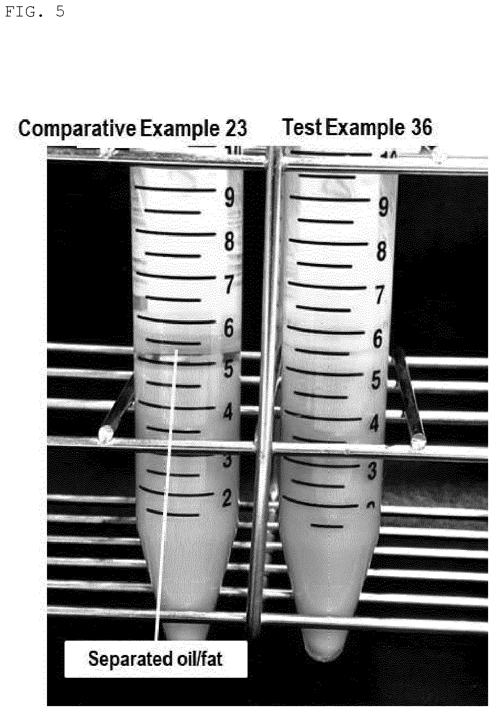

Fig. 5 illustrates a photograph of a liquid composition containing a finely wet ground plant material in oil of Test Example 36 and a liquid fat composition containing a finely dry ground plant material of Comparative Example 23, both prepared in Example 8, after left to stand for 96 hours at room temperature.

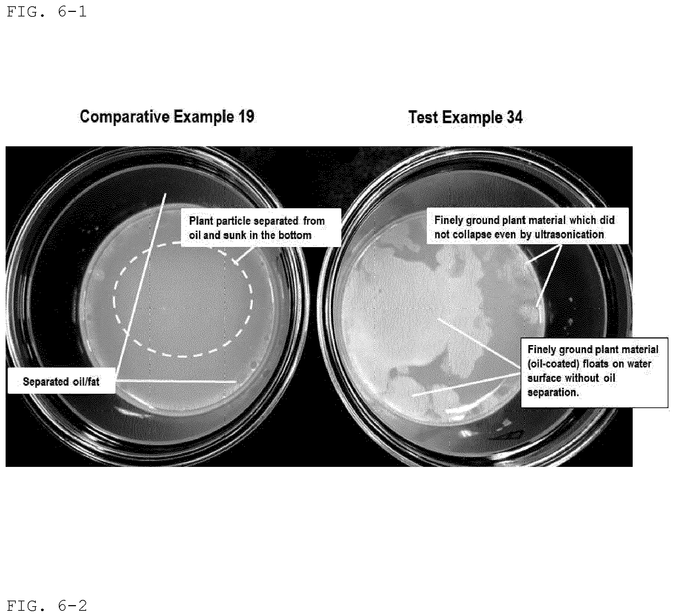

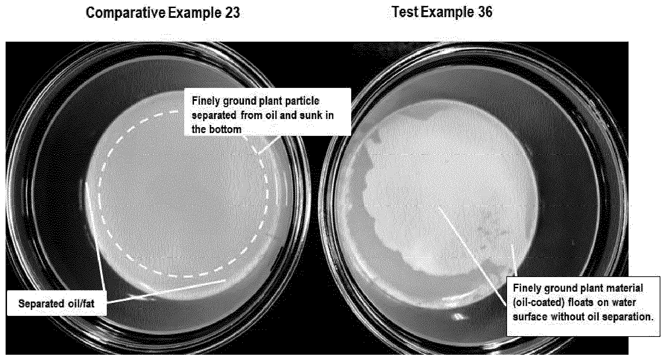

Fig. 6-1 illustrates a photograph of Example 8 showing the state of the liquid composition containing a finely wet (in oil) ground plant material of Test Example 34 and the liquid composition containing a finely dry ground material of Comparative Example 19, both prepared in Example 7. 10 drops of the compositions were each added to 20 mL of distilled water, followed by ultrasonic treatment of the whole vessel for 30 minutes, and were then observed after being allowed to stand for 18 hours.
Fig. 6-2 illustrates a photograph of a liquid composition containing a finely wet (in oil) ground plant material of Test Example 36 and a liquid composition containing a finely dry ground material of Comparative Example 23, both prepared in Example 8. 10 drops of the compositions were each added to 20 mL of distilled water, followed by ultrasonic treatment of the whole vessel for 30 minutes, and were then observed after being allowed to stand for 18 hours.

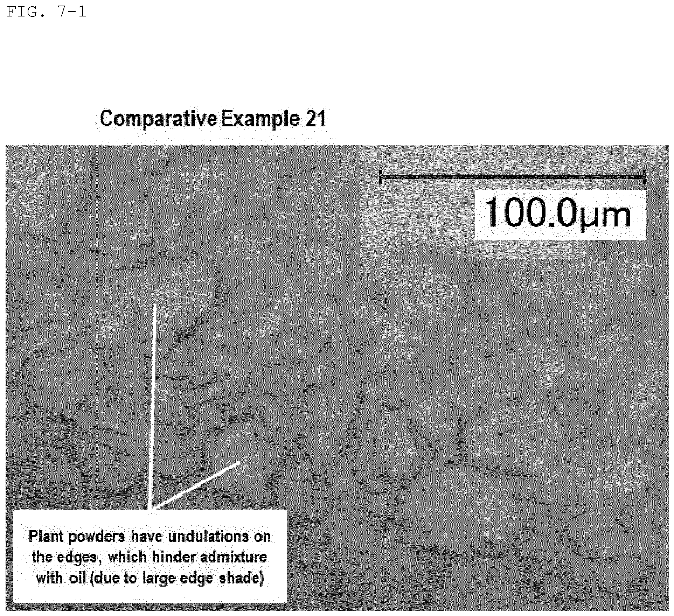

Fig. 7-1 illustrates a photograph of Example 9 regarding the liquid composition containing a finely dry ground material of Comparative Example 21, prepared in Example 7, showing the presence of the plant particles and oil observed by an optical microscope (500-fold).

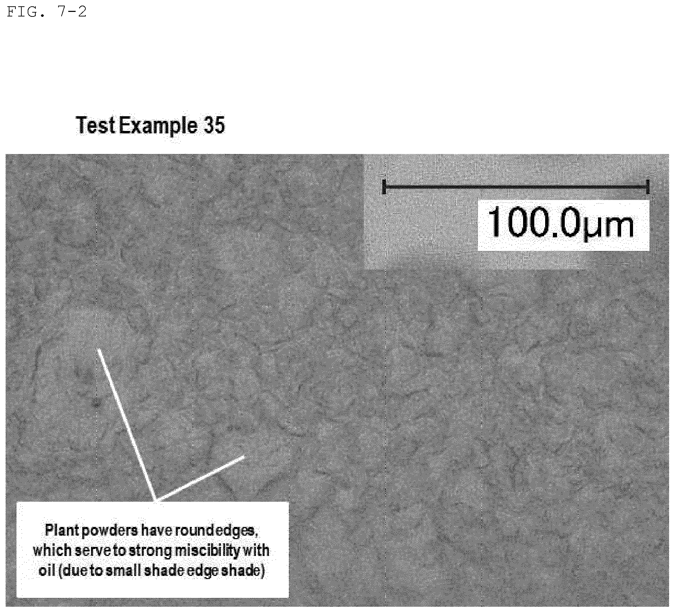

Fig. 7-2 illustrates a photograph of Example 9, regarding the liquid composition containing a finely wet (in oil) ground material of Test Example 35, prepared in Example 7, showing the presence of the plant particles and oil observed by an optical microscope (500-fold).

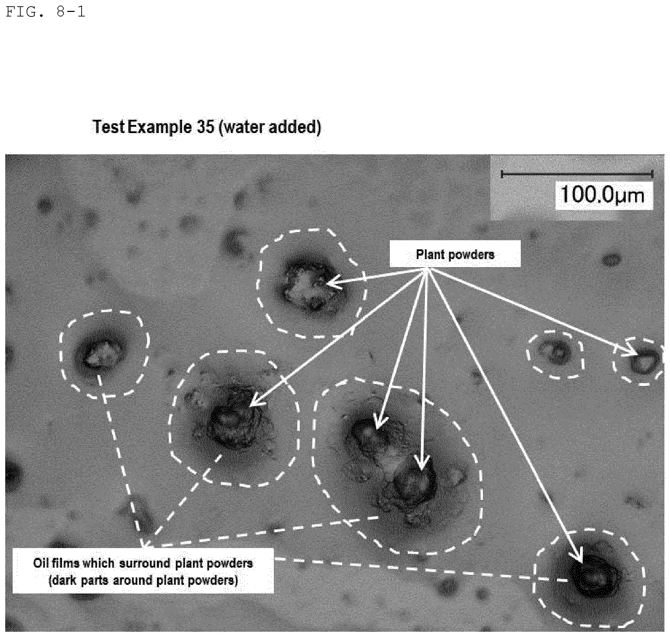

Fig. 8-1 illustrates a photograph of Example 10 regarding the liquid composition containing a finely wet (in oil) ground plant material of Test example 35, prepared in Example 7, showing the presence of the plant particles and oil observed by an optical microscope (500-fold).

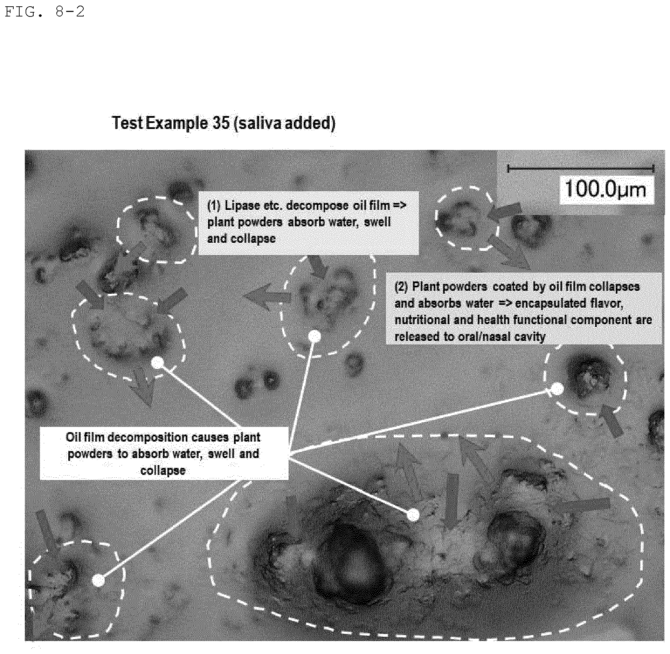

Fig. 8-2 illustrates a photograph of Example 10 regarding the liquid composition containing a finely wet (in oil) ground plant material of Test Example 35, prepared in Example 7, dispersed in human saliva to show the presence of the plant particles and oil observed by an optical microscope (500-fold).

### Detailed Description of Invention

Hereinafter, the present invention will be described in detail.

The method for producing a plant-containing solid fat composition is a method for producing the plant-containing solid fat composition containing a finely ground plant product in a solid fat, the method comprising grinding plant particles in the presence of a solid fat liquefied under warming until a mean particle size of the plant particles is 25 µm or less, followed by hardening the solid fat by cooling.

The origin of the solid fat in the present invention may not be particularly limited, and it is preferable to use a purified solid fat.

The solid fat used in the present invention assumes a solid state usually at 10°C, preferably 20°C, and includes palm oil, palm kernel oil, cocoa butter, coconut oil, Borneo fat, dammar resin, nutmeg butter, mowrah butter, shea butter, beef tallow, ghee (e.g., fermented butter oil), lard (pork tallow), butter (containing about 15 mass% of water), and beeswax. One or more of these may be used in combination, or a composition containing these may be used. From the viewpoint of easy availability and versatility of the oil/fat, cocoa butter, coconut oil, palm oil, palm kernel oil, beef tallow, ghee, lard, and butter can be more preferably used.

The plant in the present invention is not particularly limited, and is preferably an edible plant from the viewpoint of the subjects on which the effects of the present invention are exerted.

Any plant can be used as the plant of the present invention, and it is usually preferably one or more selected from the group consisting of a cereal, a potato, a bean, a nut, a seed, a vegetable, a fruit, a mushroom, an alga and a spice, from the viewpoint of edible plants used for cooking or eating raw. It is possible to use the edible part and/or the non-edible part in any combination. These edible plants may be used as they are, or may be used after applying various treatments (e.g., drying, heating, scum skimming, peeling, seed removal, afterripening, salt curing, fruit skin processing, and the like). The classification of the edible plants can be determined based on the state of the whole plant combined with the non-edible parts. The area and ratio of the non-edible part can be discerned by those skilled in the art who handle the food or processed food. As an example, by referring to the "part to discard" and "discard ratio" described in the Standard Tables of Food Composition in Japan 2015 Edition (Seventh Edition), these can be treated as the area and ratio of the non-edible part, respectively. The area and ratio of the edible part can also be figured out from the area and ratio of the non-edible part in the edible plant.

As the cereal, amaranth, foxtail millet, oat, barley, proso millet, wheat, rice, buckwheat, corn, Job's tears, Japanese barnyard millet, common sorghum, rye, triticale, fonio, quinoa, giant corn, sugar cane, and the like can be suitably used. Use of these provides a strong flavor, particularly a sweet taste, and a strong dispersion stabilizing action, and is therefore preferable. Each of the above edible plants can be used whether the part served for eating is edible or not.

As the potato, Jerusalem artichoke, konjac, sweet potato, aroid, mizuimo, yatsugashira, potato, Japanese mountain yam, ichoimo yam, Chinese yam, jinenjo, purple yam, cassava, yacon, taro, Polynesian arrowroot, purple sweet potato, yam and the like can be suitably used. Use of these provides a strong flavor and shape retaining properties, and is therefore preferable. Each of the above edible plants can be used whether the part served for eating is edible or not.

As the bean, adzuki beans, common beans, peas, cowpeas, broad beans, soybeans, ricebeans, chickpeas, runner beans, lima beans, mung beans, lentils, green peas, winged beans, hyacinth beans, edamame, and the like can be suitably used. Use of these provides a strong flavor and an emulsifying action, and is therefore preferable. Each of the above edible plants can be used whether the part served for eating is edible or not of the distinction between the edible part and the non-edible part. For the foods in which some edible parts (e.g., edamame and green peas) are treated as vegetables, it can also be determined whether they are beans based on the state of the whole plant (e.g., soybean and pea) combined with the non-edible parts (e.g., pods). Among these, soybeans (especially edamame, which are the immature seeds) and peas (especially green peas, which are the immature seeds) are preferable.

As the seeds and nuts, almonds, hemp, perilla, cashew nuts, kaya, gingko nuts, chestnuts, walnuts, poppy, coconut, sesame, chinquapin, Japanese horse-chestnut, lotus, hishi, pistachios, sunflowers, brazil nuts, hazelnuts, pecan nuts, macadamia nuts, pines, peanuts, cocoa mass, and the like can be suitably used. The use of these provides a strong flavor, particularly a unique aroma, and is therefore preferable. Each of the above edible plants can be used whether the part served for eating is edible or not.

As the vegetable, artichoke, asatsuki, ashitaba, asparagus, udo, yamaudo, bean sprouts, podded peas, snow peas, osaka shirona, okahijiki, okra, turnip, pumpkin, mustard, cauliflower, kanpyo, chrysanthemum, cabbage, green ball, red cabbage, cucumber, Siberian onion, kyona, leaf celery, watercress, threeleaf arrowhead, kale, kohlrabi, kogomi, burdock, komatsuna, zha cai, santo-sai, shishito pepper, perilla, yardlong bean, chrysanthemum greens, water shield, leaf ginger, ginger, shirouri, zuiki, sugukina, zucchini, Chinese celery, celery, Asian royal fern, tatsoi, white radish sprout, leaf radish, Japanese white radish, tsumamina, bok choy, leaf mustard, bamboo shoot, onion, red onion, sprout of Aralia elata, chicory, qing geng cai, field horsetail, New Zealand spinach, Basella alba, Japanese silverleaf, red pepper, wax gourd, sweet corn, young corn, tomato, trevise, tonburi, Nagasaki hakusai, eggplant, Black Beauty eggplant, shepherd's purse, nanohana, bitter melon, Chinese chives, spring star, Chinese yellow chives, leaf carrot, carrot, kintoki ninjin, mini carrot, garlic, garlic stems, Welsh onion, nozawana, long-stamen chive, Chinese cabbage, pak choi, radish, chayote, beet, green peppers, hinona, hiroshimana, fuki, fuki shoot, chard, broccoli, sponge gourd, spinach, horseradish, Manchurian wild Rice, mizukakena, mitsuba, myoga, propagules, Brussels sprouts, water pepper sprout, bean sprout, nalta jute, pokeweed, lily bulbs, water spinach, yomena, mugwort, peanuts, Chinese onion, shallot, leek, rhubarb, lettuce, saradana lettuce, lettuce, lotus root, arugula, tree onion, wasabi, bracken fern, kudzu, tea plant (tea), paprika and the like can be suitably used. Use of these provides a strong and unique flavor and color, and is therefore preferable. Each of the above edible plants can be used whether the part served for eating is edible or not.

As the fruit, chocolate vine, acerola, atemoya, avocado, apricot, strawberry, fig, iyokan, plum, unshu mikan, olive, orange, persimmon, kabosu, Chinese quince, kiwifruit, horned melon, kumquat, guava, gooseberry, silverberry, grapefruit, coconut, star fruit, cherry, pomegranate, sanbokan, shiikuwasha, watermelon, sudachi, Japanese plum, prune, daidai, tangor, tangelo, cherimoya, durian, hassaku orange, passion fruit, banana, papaya, pitaya, hyuganatsu, loquat, grape, blueberry, pomelo, white sapote, ponkan, oriental melon, quince, mango, mangosteen, melon, peach, nectarine, red bayberry, yuzu, lychee, lime, raspberry, longan, apple, lemon, and the like can be suitably used. Use of these provides a strong and unique flavor and color, and is therefore preferable. Each of the above edible plants can be used whether the part served for eating is edible or not.

As the mushrooms, enokitake, Jew's ear fungus, black abalone mushroom, shiitake, fried chicken mushroom, buna shimeji, honshimeji, golden oyster mushroom, nameko, numerisugitake, oyster mushroom, king trumpet mushroom, Hen-of-the-woods, common mushroom, matsutake, poplar mushroom, and the like can be suitably used. The use of these provides a strong flavor, particularly a unique aroma and taste, and is therefore preferable. Each of the above edible plants can be used whether the part served for eating is edible or not.

As the alga, sea lettuce, green laver, amanori, arame, iwanori, egonori, ogonori, kawanori, sea grape, kombu, suizenji nori, tengusa, tosaka nori, hijiki, hitoegusa, funori, rigid hornwort, mukade nori, mozuku, wakame and the like can be suitably used. Use of these provides a strong flavor and a unique viscosity, and is therefore preferable. Each of the above edible plants can be used whether the part served for eating is edible or not.

As the spice, allspice, clove, black pepper, Japanese pepper, cinnamon, sage, thyme, sweet and chili peppers, nutmeg, basil, parsley, oregano, rosemary, peppermint, savory, lemongrass, dill, wasabi leaf, Japanese pepper leaves, stevia, and the like can be suitably used. Use of these provides a strong and unique flavor, and is therefore preferable. Each of the above edible plants can be used whether the part served for eating is edible or not.

In particular, it is preferably one or more selected from the group consisting of paprika, edamame, green pea, pumpkin, corn, beet, carrot, broccoli, tomato, cabbage, bitter melon, nalta jute, okra, yam, garlic, onion, and Welsh onion. Use of these provides a bright color, a strong flavor and a characteristic viscosity, and to contain various nutritional and health functional components (such as vitamins and pigments). Each of the above edible plants can be used whether the part served for eating is edible or not.

In the present invention, it is preferable to use a plant material that has been coarsely ground in advance because of the necessity of a subsequent fine grinding. The method for the coarse grinding is not limited in any way, and from the viewpoint of treatment efficiency and handling operability, a method in which the plant material is subjected to a drying treatment and then subjected to a dry coarse grinding is preferable.

As the drying method, any method generally used for drying foods may be used, and examples thereof include drying methods such as sun drying, shade drying, freeze drying, air drying (such as hot air drying, fluidized bed drying, spray drying, drum drying, and low temperature drying), press drying, reduced-pressure drying, microwave drying, and hot oil drying, and it is preferable to use a method by air drying (particularly hot air drying) or freeze drying, convenient for industrial large-scale treatments, which are easy to adjust the water content regardless of the plant material, and without decreasing the component quality of the plant material.

The coarse grinding method is not particularly limited, and should be means capable of treating food in a short time with a high shear force. It may be any of devices called a blender, a mixer, a mill, a kneader, a grinder, a crusher, an attritor and the like, it may be any of dry grinding and wet grinding, and it may be any of high-temperature grinding, room-temperature grinding and low-temperature grinding. Among these, dry grinding and room-temperature grinding are preferable from the viewpoint of the working efficiency when being applied to the further fine grinding and the influence on the component quality of the plant material. Moreover, the size of the coarsely ground particles is not particularly limited as long as it can be treated in the case of performing the subsequent fine grinding in the oil, and may be appropriately adjusted. The average particle diameter of the coarsely ground particles is preferably 1.5 times or more, more preferably 2 times or more, further preferably 3 times or more the average particle diameter of the target finely ground material, from the viewpoint of the efficiency of the fine grinding and the handling of the powder. As a specific upper limit of the average particle diameter of the coarsely ground material, 200 µm or less is preferable, 100 µm or less is more preferable, and 50 µm or less is further preferable. Moreover, the lower limit may be 1.5 times or more, 2 times or more, or even 3 times or more the average particle diameter of the target finely ground material, and is preferably 40 µm or more, and further preferably 30 µm or more.

In order to prepare the plant-containing solid fat composition of the present invention using the plant particles prepared by the pretreatment method as described above, these plant particles need to be further finely ground in a solid fat liquefied with heating. The reason for this is to impart the various properties possessed by the plant-containing solid fat composition of the present invention described below.

The method for subjecting plant particles to a finely grinding in the present invention is not particularly limited as long as it is a wet treatment method because the plant particles need to be finely ground in oil. It may be any means as long as it can process the plant particles in a short time with a high shear force, and a medium stirring mill such as a bead mill, a ball mill (such as a rolling, vibrational, or planetary mill), a roll mill, a colloid mill, a starburst, a high-pressure homogenizer, and the like can be used, and from the viewpoint of treatment efficiency and the effects of the present invention, a roll mill or a bead mill which is a medium stirring mill can be more suitably used. In each method, there is a method of treating by circulating the plant particles which are the raw material, or a treating method such as a one-pass method in which the plant particles are passed only once, and if the average particle diameter of the finely ground material shown below can be adjusted to a preferable range, the method and the number of treatments may be appropriately selected, combined, and adjusted.

When the plant particles are subjected to a fine grinding by the wet treatment method in the presence of a solid fat liquefied with heating, the plant particles are kneaded and attritted in a solid fat in a liquid state, and the surface or surface layer of the finely ground plant material becomes coated and infiltrated by the oil/fat. When the finely ground plant material is dropped into hot water and dispersed by ultrasonic treatment or the like, it is dispersed in a state of floating on the water surface or in water in a liquid state before hardening. The finely ground plant material with its surface or surface layer coated and infiltrated by the oil/fat appears as particles surrounded by the surrounding oil and infiltrated oil (appearing as a dark shadow) under observation by an optical microscope (500x) while sandwiched between a slide glass and a prepared slide (with the finely ground plant material crushed). It is preferable that its inner side's (the part other than the surface layer that is not infiltrated by the oil/fat and that appears white) exposure ratio (that is, the surface exposure ratio of the finely ground plant material that is not infiltrated by the oil/fat) be 70% or less.

The average particle diameter of the finely ground plant material should be 25 µm or less, and from the viewpoint of the questions about the safety of nanomaterials, 0.3 µm or more is better, 0.5 µm or more is preferable, and 1 µm or more is more preferable. On the other hand, from the viewpoint of the strength of the effects of the present invention, 20 µm or less is more preferable. The particle diameter (d50) measured by using a laser diffraction type particle size distribution measuring instrument, for example, Microtrac MT3300 EXII system manufactured by MicrotracBEL Corp., distilled water as the solvent during the measurement, and DMS2 (Data Management System version 2, MicrotracBEL Corp.) as the measuring application software, can be expressed as the average particle diameter of the finely ground plant material.

Since the finely ground plant material is prepared by a wet fine grinding in a solid fat liquefied with heating, in a state shielded from oxygen and moisture, the components involved in the flavor and color of the plant particles, and the nutritional and health functional components such as vitamins and pigments are not oxidized, are not subjected to enzymatic action, and are stably contained (encapsulated) as substances. This applies not only to oil-soluble components but also to water-soluble components.

As the flavor components, taste components or aroma components inherent to the plant powder, which is the raw material, are directly encapsulated in a fresh state, without alteration or loss thereof, and as the components relating to color, pigment components inherent to the plant powder, which is the raw material, for example, components such as zeaxanthin in the yellow of paprika and corn, betanin in the magenta of beet, carotene in the orange of pumpkin and carrot, chlorophyll in the green of green peas and broccoli, and lycopene in the red of tomato, are directly encapsulated. Nutritional and health functional components include, in addition to the pigment components, isoflavone from edamame, vitamin C and vitamin U from cabbage, momordicin (bitter component) and vitamin C from bitter melon, mucin, mannan (viscous component) and β-carotene from nalta jute, mucin and mannan (viscous component) from okra, mucin (viscous component) and dioscholine (protein component) from yam, vitamin B group and allicin (organic sulfur compound) from garlic, quercetin (a type of flavonoid) and allicin (organic sulfur compound) from onion, allicin (organic sulfur compound) and anti-influenza component (viscous component) from Welsh onion, and these components are directly encapsulated.

The plant of the present invention may be seasoned and/or cooked in advance.

The seasoning is not limited in any way, and it is preferably seasoned by adding salt, sugar and the like. The cooking is not limited in any way, and caramelizing the plant material by stir-frying or browning with oil is preferable from the viewpoint of imparting a unique cooked flavor and a characteristic brown color. The seasoning and cooking may be used in combination. These seasoned and/or cooked plant materials should be ground in the same manner as described above before subjecting them to a fine grinding in oil.

As the salt, sodium chloride or potassium chloride can be used, and sodium chloride is preferable from the viewpoint of taste. As the sugar, various sugars having a sweet taste can be used, and the type thereof is not limited in any way. Arabinose, xylose, fructose, glucose, galactose, sucrose, lactose, maltose, trehalose, erythritol, maltitol, cellobiose, maltotriose, sucralose, aspartame, acesulfame potassium, fructooligosaccharide, xylitol, stevia and the like can be used, and from the viewpoint of taste, glucose, fructose, sucrose, trehalose, sucralose, xylitol, and stevia are preferable. These salts and sugars may be used in combination.

In an embodiment of the seasoning, as described above, a treatment such as heating and cooking by adding salt or sugar to the plant material may be performed in advance, and when the coarsely ground material of the plant particles is subjected to a fine grinding in oil, it may also be an aspect in which the sugar or salt is separately coarsely ground, then combined and further subjected to a fine grinding in oil at the same time as the coarsely ground plant material, which is preferable from the viewpoint of dispersion stability in the plant-containing solid fat composition of the present invention.

As long as the plant-containing solid fat composition of the present invention exhibits the above-mentioned effects, it is perfectly acceptable that it contains components and materials other than the salt and sugar.

Examples of the components and materials other than the salt and sugars mentioned herein include sweeteners, colorants, preservatives, thickeners, stabilizers, gelling agents, sizing agents, antioxidants, color formers, bleaching agents, fungicides, yeast foods, gum bases, kansui, bittering agents, enzymes, brightening agents, flavoring agents, acidulants, chewing gum softeners, seasonings, tofu coagulants, emulsifiers, pH adjusters, raising agents, enrichments, other food additives, water, alcohol, foodstuffs, and processed foods. One or more of these may be used in combination, or a composition containing these may be used. From the viewpoint of safety, it is preferably for edible use.

The fine grinding of the plant particles in a solid fat is performed by liquefying the solid fat in advance by heating, and heating/cooling the fine grinding machine as necessary (heating should reach the temperature equal to or above the melting point of the solid fat, but the temperature at which the solid fat can maintain the liquid state but is not hardened, as long as it does not interfere with the machine operation).

In the liquid state of the plant-containing solid fat composition, water may be added thereto, the mixture may be homogenized by an operation such as stirring, and then freeze-dried to solidify. In this case, the plant-containing solid fat composition becomes porous due to the evaporation of water. The porous plant-containing solid fat composition prepared in this manner has the same properties as the above-described plant-containing solid fat composition, and in particular, it melts better in the mouth from being porous, and is therefore more suitable for eating as it is. From the viewpoint of crumbling more easily, it is highly suitable for use as a topping agent, and can also be used for such purposes.

The amount of water added at this point should be 10 mass% or more based on the total mass of the plant-containing solid fat composition in a liquid state, and from the viewpoint of appropriate disintegration properties, 15 mass% or more is preferable, and 20 mass% or more is more preferable. On the other hand, the upper limit should be 60 mass% or less, and from the viewpoint of appropriate shape retention, 55 mass% or less is preferable, and 50 mass% or less is more preferable.

The ratio of the finely ground plant material to the total of the solid fat and the finely ground plant material should be 15 mass% or more, and from the viewpoint of taste and nutritional function, 20 mass% or more is preferable, and 25 mass% is more preferable. The upper limit should be 85 mass% or less, and from the viewpoint of the operability of the wet fine grinding, 80 mass% or less is preferable, and 75 mass% or less is further preferable.

According to the above-mentioned production method, a plant-containing solid fat composition, in which the surface of a finely ground plant material having an average particle diameter of 25 µm or less is coated with a solid fat and the surface layer of the finely ground plant material is infiltrated by the solid fat, is obtained.

It is preferable that the ratio of the finely ground plant material to the total of the solid fat and the finely ground plant material in the plant-containing solid fat composition be 15 mass% or more and 85 mass% or less as described above. When the plant-containing solid fat composition of the present invention is subjected to a fine grinding, hydrated and homogenized, then freeze-dried and solidified as described above, the obtained composition is porous.

According to the above-described production method, a plant-containing solid fat composition is obtained in a state in which the plant particles are mixed with a solid fat liquefied with heating while containing the solid fat and the finely ground plant material.

This plant-containing solid fat composition, which has been subjected to a fine grinding to an average particle diameter of 25 µm or less and hardened, has characteristics differing from those of conventional plant-containing solid fat compositions as shown in the Examples below, and is a composition that is impossible or impractical to identify by structure or properties.

In one embodiment of the plant-containing solid fat composition of the present invention, a porous plant-containing solid fat composition obtained by subjecting the finely ground plant material to a fine grinding together with the solid fat liquefied with heating until an average particle diameter of the plant particles reaches 25 µm or less, then further adding water, homogenizing, and performing a freeze-drying treatment, can be mentioned. Moreover, the ratio of the finely ground plant material to the total of the solid fat and the finely ground plant material is preferably 15 mass% or more and 85 mass% or less. The term "porous" as used herein refers to an aspect having a large number of pores, and it is preferable that the specific surface area of the porous plant-containing solid fat composition obtained by the BET specific surface area measuring method using nitrogen be 1 m²/g or less.

The details of the plant-containing solid fat composition of the present invention are as described in detail in the above-mentioned production method. According to this production method, the plant particles of the finely ground plant material are kneaded and attritted in the oil/fat to cause its surface or surface layer to be coated and infiltrated by the fat, which allows exhibition of the effects of the present invention. The shape of the plant-containing solid fat composition of the present invention is not limited in any way as long as it is solid, and any shape can be selected. Any food material or food or drink can be encapsulated therein regardless of its physical properties.

The present invention also relates to a method for improving the appearance and taste of a plant-containing solid fat composition containing a solid fat and a finely ground plant material, wherein the appearance and taste of a plant-containing solid fat composition are improved by subjecting the plant particles, in the presence of a solid fat liquefied with heating, to a fine grinding until the average particle diameter reaches 25 µm or less, by coating the surface of the finely ground plant material with the solid fat, and infiltrating the surface layer of the finely ground plant material by the solid fat to harden it.

The details of the improvement method of the present invention are as described in the above-mentioned production method. The finely ground plant material in the plant-containing solid fat composition is obtained by kneading and attritting the plant particles in the oil/fat by the production method to cause its surface or surface layer to be coated and infiltrated by the oil/fat, and has a significantly good affinity with the surrounding solid fat. Therefore, this blocks the expulsion of the plant material associated with the crystallization of the solid fat, and as the crystallization of the solid fat progresses, the plant material becomes entrapped in the crystal and defects such as overall whitening or local mottling (the inside is in the same state) above are unlikely to occur, and the composition is improved to assume uniform appearance (the inside is in the same state).

With the same principle, as the uneven distribution of the plant material is resolved, the crystals of the solid fat form a dense and highly continuous structure, which improves the texture by having the textural properties that crumble or have roughness, has a high shape retention, and melts smoothly in the mouth.

In the present invention, the taste is also improved. That is, by eating the plant-containing solid fat composition, the development of the taste and aroma in the oral cavity is significantly enhanced and maintained.

The reason for this is that, in the plant-containing solid fat composition of the present invention, since the surface or surface layer of the finely ground plant material is coated and infiltrated by a solid fat, when eaten, the flavor components derived from the plant, which have been retained without volatilizing or being altered by the presence of an oil layer, are released into the oral cavity only after being decomposed by lipase or the like contained in saliva. Thereafter, they rapidly spread explosively from the oral cavity to the nasal cavity, and the taste and aroma are significantly strongly felt and maintained. The flavor having once spread in the oral cavity and nasal cavity is strongly maintained even after swallowing these, and imparts a lingering taste of the preferable flavor inherent to the plant.

As described above, the plant-containing solid fat composition of the present invention provides a long-lasting flavor and a strong lingering taste, but if the tasting timing is defined chronologically as the initial taste (immediately after eating), the middle taste (during eating), and the after taste (after swallowing), in addition to the flavor of the initial taste, the flavor becomes stronger from the middle to the after taste, and the timing of flavor expression and the difference in intensity of the flavor bring surprise and freshness, which is a preferable taste.

In the present invention, the nutritional function is also improved. That is, the absorbability (absorption speed and absorption ratio) of the nutritional and health functional components is significantly improved by: (1) the plant material being used as it is, and being rich in nutritional and health functional components, (2) the nutritional and health functional components (vitamins, pigments, and other functional components, whether water-soluble or oil-soluble) being maintained without alteration or loss since the plant particles are coated with an oil/fat, (3) the nutritional and health functional components being easily released in the body since the plant tissue is very finely attritted, (4) the hard to absorb oil-soluble vitamins, pigments, and other nutritional and functional components ingested with the oil/fat being easily absorbed in the intestinal tract since the surface or surface layer of the finely ground plant material is coated and infiltrated by an oil layer.

The present invention requires a fine grinding of the plant material in a solid fat in a liquid state. When the plant material is subjected to a fine grinding in water, the prepared finely ground plant material-containing water provides an inferior color development, a flavor mainly composed of weak initial taste with even weaker middle taste and after taste, and lacking in its durability, compared to the plant-containing solid fat composition of the present invention. This can be considered to be due to the fact that, during the operation of the fine grinding in water or during storage after the treatment, the involved components are oxidatively degraded and subjected to enzymatic action, which causes these flavor components, whether water-soluble or oil-soluble, to not be stably maintained in water for a long period of time. Similarly, vitamins, pigments, and other nutritional and functional components may not be stably maintained in water for a long period of time, and the promotion of the absorption of the nutritional and health functional components can therefore not be expected.

According to the present invention, the appearance is improved: appearance defects such as overall whitening or local mottling do not occur, the color development by the plant-derived pigments is good, and a uniform and beautiful appearance is obtained. The crystals form a dense and highly continuous structure, which improves the texture by having the physical properties of a texture that does not crumble or have roughness, and has a high shape retention and melts smoothly in the mouth. The taste is improved: the straight and fresh flavor of the fresh plant is strong, and not only the initial taste of the flavor, but also the middle and after taste of the preferable flavor in the oral cavity are developed and maintained after swallowing. A large amount of nutritional and health functional components such as vitamins and pigment components are contained, and the nutritional and health functional components are easily absorbed, which improves the nutritional function.

### Examples

Hereafter, the present invention will be described in more detail by way of Examples, but these Examples are merely examples for convenience of explanation, and the present invention is not limited to these Examples in any way.

### [Example 1] Preparation and verification of the plant-containing solid fat composition

Here, the plant-containing solid fat composition of the present invention was prepared and its properties were examined.

As raw materials, commercially available corn seeds (raw) and soybeans (dried) were selected, and the corn seeds were subjected to ventilation drying at 70°C for 4 hours to obtain a dried product having a water content of 10% or less. This dried product was ground by a hammer mill and further coarsely ground by a dry mill. The soybeans were peeled and coarsely ground with a dry mill. The average particle diameter of the coarsely ground dried corn powder was 20 µm for the corn seeds and 50 µm for the soybeans. The flavor and color of the coarsely ground powder were not much different compared to before the drying treatment.

60 mass% of this coarsely ground powder (breakdown: 50 mass% corn seeds and 10 mass% soybeans) was mixed with 40 mass% of commercially available cocoa butter (solid fat) liquefied by heating in a 70°C water bath, which was then stirred well without the cocoa butter hardening and dispersed uniformly. Thereafter, in order to prepare the plant-containing solid fat composition of the present invention, the coarsely ground dried corn seed powder and the dried soybean peeled powder were subjected to a fine grinding together in the solid fat in a liquid state in a wet bead mill (one pass, heating, no cooling. As a result of this treatment, the average particle diameter of the finely ground mixture of corn and soybean was 25 µm.), then, after performing a tempering treatment (a temperature change of 42°C → 29°C → 32°C was applied while stirring), the mixture was poured into a silicon mold, and allowed to stand at 20°C overnight to harden. Conching was not particularly performed except for the stirring in the above tempering treatment (required about 40 minutes). As a device for performing the tempering operation, "Melting & Tempering Machine Mini Revolution FV-68 (FITTECH)" was used.

As shown in Table 1, as comparative controls, one with cocoa butter only (no material added) (Comparative Example 1), one with cocoa mass (commercially available, untreated) added (Comparative Example 2), and one with the dried corn seed powder and dried soybean peeled powder added, to which the above-mentioned fine grinding was performed by a dry method (Comparative Example 3), were prepared.

The plant-containing solid fat composition after hardening was recovered, and the appearance, texture, and taste were evaluated. The evaluation was performed by six professional panelists, scored according to the following evaluation criteria, and the evaluation results were obtained by determining the weighted average (rounded off to the decimal point). The overall evaluation was performed in the same manner while including the remarks to the evaluation results of each evaluation criterion.

### (Evaluation criterion 1: Appearance)

5: Preferable, with a uniform appearance without unevenness.
4: Slightly preferable, with a uniform appearance with almost no unevenness.
3: Acceptable, with an appearance not uneven enough to feel strange.
2: Slightly unpreferable, with an uneven appearance that feels slightly strange.
1: Unpreferable, with an uneven appearance that feels clearly strange.

### (Evaluation criterion 2: Texture)

5: Preferable, with a high shape retention, a good in-mouth melting feeling, a smooth feeling and no roughness at all.
4: Slightly preferable, with a slightly high shape retention, a rather good in-mouth melting feeling, a smooth feeling and almost no roughness.
3: Acceptable, with slightly brittle physical properties, slightly difficult to melt in the mouth, slightly rough, but overall smooth.
2: Slightly unpreferable, with slight crumblingness, and slight roughness.
1: Unpreferable, with crumblingness and roughness.

### (Evaluation criterion 3: Taste)

5: Preferable, with a significantly strong flavor derived from the plant material and a lingering taste.
4: Slightly preferable, with a strong flavor derived from the plant material and a slight lingering taste.
3: Acceptable, with a flavor derived from the plant material and a slightly weak lingering taste.
2: Slightly unpreferable, with a weak flavor derived from the plant material and a weak lingering taste.
1: Unpreferable, with a significantly weak flavor derived from the plant material and no lingering taste.

### (Evaluation criterion 4: Overall evaluation)

- 5:: Excellent.
- 4:: Slightly excellent.
- 3:: Acceptable.
- 2:: Slightly inferior.
- 1:: Inferior.

The results are shown in Table 1.

**[Table 1]**

| | Solid fat | | Plant material | | | Additional notes | Evaluation results | | | | |
|---|---|---|---|---|---|---|---|---|---|---|---|
| | Type | Amount blended (mass%) | Type | Amount blended (mass%) | Average particle diameter | | Appearance | Texture | Taste | Overall evaluation | Remarks |
| Comparative Example 1 | Cocoa butter | 100 | None | 0 | - | Control with nothing added | 5 | 5 | - | - | - |
| Comparative Example 2 | Cocoa butter | 40 | Cacao mass powder | 60 | 10µm | No treatment | 2 | 4 | 2 | 2 | Water drop-like appearance |
| Comparative Example 3 | Cocoa butter | 40 | Corn seed powder | 50 | 10µm | Dry fine grinding | 1 | 2 | 2 | 2 | Mottled appearance |
| | | | Peeled soybean powder | 10 | 40µm | Dry fine grinding | | | | | |
| Test Example 1 | Cocoa butter | 40 | Corn seed powder | 50 | 25µm | Wet fine grinding of corn and soybean in liquid cocoa butter (bead mill) | 4 | 5 | 5 | 5 | - |
| | | | Peeled soybean powder | 10 | | | | | | | |

As a result, for Comparative Example 1 containing cocoa butter only, the appearance and the texture were both excellent, as shown in Figure 1A, since it contained no plant particles (same applies to the inside, Figure 2A). By contrast, for Comparative Example 2 containing the cocoa mass powder, a large number of waterdrop-shaped white outlines were observed as shown in Figure 1B (same applies to the inside, Figure 2B). For Comparative Example 3 containing the plant particles subjected to a dry fine grinding, a large number of overall whitish and mottled patterns were observed, as shown in Figure 1C (same applies to the inside, Figure 2C). In the case of subjecting the plant particles to a wet fine grinding in cocoa butter of Test Example 1, the appearance was excellent, with a dark and uniform color derived from the plant material, as shown in Figure 1D (same applies to the inside, Figure 2D).

As to the texture, Comparative Example 2 in which cocoa mass powder was added, provided excellent texture, with a slightly high shape retention, a good in-mouth melting feeling, a smooth feeling, and no roughness. This was presumed to be due to the extremely small average particle diameter of cacao mass. Comparative Example 3 in which plant material subjected to a dry fine grinding was added provided properties as if it were crumbling in clumps, and gave a rough feeling during in-mouth melting. This was presumed to be because the plant material had a large particle diameter, and as the crystallization of cocoa butter progressed, the plant material was expulsed, and locally accumulated, making that part brittle, and the aggregates of the plant particles of that part caused to feel rough. For reference, their surfaces when observed with an optical microscope (1000x) are shown in Figures 3A to 3D (the symbols are the same as described above).

By contrast, in the case of subjecting the plant material to a wet fine grinding in cocoa mass powder of Test Example 1, the texture was exceptional, with a high shape retention, a good melting feeling in the mouth, a smooth feeling, and no roughness at all. This was thought to be because the crystallization of cocoa butter progressed without expulsing the plant material, resulting in an overall dense and continuous solid fat mass with the plant material encapsulated. This was presumed to result from the fact that subjecting the plant material to a wet fine grinding in cocoa butter allowed the surface or surface layer of the plant material to be coated and infiltrated by cocoa butter, and to significantly increase the affinity with the surrounding cocoa butter.

As to the taste, in Comparative Example 2 in which the cacao mass powder was added, and in Comparative Example 3 in which the plant material subjected to a dry fine grinding was added, the flavor of the cacao mass, the corn material and the soy material were felt in the initial taste, but the middle and after taste were weak and there was no lingering taste. By contrast, in the case of subjecting the plant material to a wet fine grinding treatment in cocoa butter of Test Example 1, following the initial taste immediately after putting into the oral cavity, the flavor strongly developed as the melting in the mouth progressed, and it felt like in the middle and after taste, the aroma and taste were both spreading explosively in the oral cavity and nasal cavity. Even after swallowing, the lingering of these flavors was maintained for a long time, exhibiting a very impressive and excellent taste. This was presumed to be because subjecting the plant material to a wet fine grinding in cocoa butter allowed the flavor components of the plant particles to be protected from oxidation and volatilization and maintained by the surface or surface layer of the plant particles coated and infiltrated by cocoa butter, and then this structure collapsed when dissolved in the oral cavity, thereby releasing the flavor components (contents) at once.

### [Example 2] Verification of the impact of the particle diameter of the finely ground plant material

In Example 1, it was found that when the plant particles were subjected to a fine grinding together with cocoa butter and the average particle diameter of the finely ground plant material was 25 µm, a remarkable effect of improving the appearance, taste, and texture was exhibited. By contrast, it was found that when it was not subjected to a dry fine grinding together with cocoa butter, the appearance and taste was inferior even with an average particle diameter of the finely ground plant material of 40 µm or less (peeled soybean powder of Comparative Example 3) and 10 µm or less (cocoa mass powder of Comparative Example 2, and corn seed powder of Comparative Example 3).

Therefore, here, the relationship between the particle diameter of the finely ground plant material and the effects of the present invention when the plant particles were subjected to a fine grinding together with a solid fat was verified. Cocoa butter was selected as a representative of the solid fat, corn seed powder was used as the plant powder, and subjected to a fine grinding together with cocoa butter to prepare the plant-containing solid fat compositions containing a finely ground plant material having the various average particle diameters shown in Table 2. In addition, the samples were prepared according to the method of Example 1. This was evaluated in the same manner as in Example 1.

The results are shown in Table 2.

**[Table 2]**

| | Solid fat | | Plant material | | | Additional notes | Evaluation results | | | | |
|---|---|---|---|---|---|---|---|---|---|---|---|
| | Type | Amount blended (mass%) | Type | Amount blended (mass%) | Average particle diameter | | Appearance | Texture | Taste | Overall evaluation | Remarks |
| Comparative Example 4 | Cocoa butter | 100 | None | 0 | - | Control with nothing added | 5 | 5 | - | - | - |
| Comparative Example 5 | Cocoa butter | 40 | Corn seed powder | 60 | 50µm | 1 min bead mill treatment | 1 | 2 | 1 | 1 | Mottled appearance |
| Comparative Example 6 | Cocoa butter | 40 | Corn seed powder | 60 | 35µm | 5 min bead mill treatment | 2 | 2 | 2 | 2 | Mottled appearance |
| Test Example 2 | Cocoa butter | 40 | Corn seed powder | 60 | 25µm | 15 min bead mill treatment | 4 | 5 | 5 | 5 | - |
| Test Example 3 | Cocoa butter | 40 | Corn seed powder | 60 | 15µm | 30 min bead mill treatment | 5 | 5 | 5 | 5 | - |
| Test Example 4 | Cocoa butter | 40 | Corn seed powder | 60 | 10µm | 60 min bead mill treatment | 5 | 5 | 5 | 5 | - |
| Test Example 5 | Cocoa butter | 40 | Corn seed powder | 60 | 5µm | 90 min bead mill treatment | 5 | 5 | 5 | 5 | - |

As a result, it was found that when the particle diameter of the finely ground plant material was 25 µm or less, the appearance, texture and taste of the plant-containing solid fat composition were remarkably superior to those with more. It was also found that the results were even better with smaller average particle diameter.

### [Example 3] Verification of the impact of the solid fat and plant material

In Examples 1 and 2, cocoa butter was selected as a representative of the solid fat for the verification, and it was verified whether or not similar phenomena would occur with other solid fats and finely ground plant materials of other plant particles. Wet ground materials of various plant particles were prepared using various solid fats shown in Table 2. The particle diameter was adjusted by appropriately adjusting the refining treatment time. In addition, the samples were prepared according to Example 1. This was evaluated in the same manner as in Example 1.

The results are shown in Table 3.

**[Table 3]**

| | Solid fat | | Plant material | | | Additional notes | Evaluation results | | | | |
|---|---|---|---|---|---|---|---|---|---|---|---|
| | Type | Amount blended (mass%) | Type | Amount blended (mass%) | Average particle diameter | | Appearance | Texture | Taste | Overall evaluation | Remarks |
| Comparative Example 7 | Coconut oil | 40 | Beet root | 60 | 15µm | Dry fine grinding | 1 | 2 | 2 | 2 | Mottled appearance |
| Comparative Example 8 | Coconut oil | 40 | Beet root | 60 | 30µm | Wet fine grinding of beet root in liquid coconut oil (bead mill) | 2 | 2 | 2 | 2 | Mottled appearance |
| Test Example 6 | Coconut oil | 40 | Beet root | 60 | 15µm | Wet fine grinding of beet root in liquid coconut oil (bead mill) | 5 | 5 | 5 | 5 | - |
| Comparative Example 9 | High-melting-point palm oil | 40 | Carrot | 60 | 5µm | Dry fine grinding | 1 | 2 | 2 | 2 | Mottled appearance |
| Comparative Example 10 | High-melting-point palm oil | 40 | Carrot | 60 | 30µm | Wet fine grinding of carrot in liquid high-melting-point palm oil (bead mill) | 2 | 2 | 2 | 2 | Mottled appearance |
| Test Example 7 | High-melting-point palm oil | 40 | Carrot | 60 | 5µm | Wet fine grinding of carrot in liquid high-melting-point palm oil (bead mill) | 5 | 5 | 5 | 5 | - |
| Comparative Example 11 | Ghee | 40 | Caramelized onion | 60 | 20µm | Dry fine grinding | 1 | 1 | 2 | 1 | Mottled appearance |
| Comparative Example 12 | Ghee | 40 | Caramelized onion | 60 | 30µm | Wet fine grinding of caramelized onion in liquid ghee (bead mill) | 2 | 2 | 2 | 2 | Mottled appearance |
| Test Example 8 | Ghee | 40 | Caramelized onion | 60 | 20µm | Wet fine grinding of caramelized onion in liquid ghee (bead mill) | 5 | 5 | 5 | 5 | - |
| Comparative Example 13 | Lard | 40 | Broccoli | 60 | 10µm | Dry fine grinding | 1 | 2 | 2 | 2 | Mottled appearance |
| Comparative Example 14 | Lard | 40 | Broccoli | 60 | 30µm | Wet fine grinding of broccoli in liquid lard (bead mill) | 2 | 2 | 2 | 2 | Mottled appearance |
| Test Example 9 | Lard | 40 | Broccoli | 60 | 10µm | Wet fine grinding of broccoli in liquid lard (bead mill) | 5 | 5 | 5 | 5 | - |
| Comparative Example 15 | Butter | 40 | Tomato | 60 | 25µm | Dry fine grinding | 1 | 1 | 2 | 1 | Mottled appearance |
| Comparative Example 16 | Butter | 40 | Tomato | 60 | 30µm | Wet fine grinding of tomato in liquid butter (bead mill) | 2 | 2 | 2 | 2 | Mottled appearance |
| Test Example 10 | Butter | 40 | Tomato | 60 | 25µm | Wet fine grinding of tomato in liquid butter (bead mill) | 4 | 5 | 5 | 5 | - |

As a result, even when the type of solid fat or plant material was changed, the appearance, texture, taste, and overall evaluation were all excellent when the plant material was subjected to a wet fine grinding in a solid fat, compared to when the powder obtained by subjecting the plant material to a dry grinding was added. Therefore, it was found that the effects of the plant-containing solid fat composition of the present invention were universally exhibited even when the type of solid fat or plant material was changed.

### [Example 4] Verification of the range of content of the plant material to the solid fat

In Examples 1 to 3, the content ratio of the plant material to the total of the solid fat and the plant material was fixed at 60 mass% for the verification. Therefore, here, the content of the plant material was changed as shown in Table 4 to verify the range. In addition, the preparation and evaluation of the samples were performed in the same manner as in Example 1. This was evaluated in the same manner as in Example 1.

The results are shown in Table 4.

**[Table 4]**

| | Solid fat | | Plant material | | | Additional notes | Evaluation results | | | | |
|---|---|---|---|---|---|---|---|---|---|---|---|
| | Type | Amount blended (mass%) | Type | Amount blended (mass%) | Average particle diameter | | Appearance | Texture | Taste | Overall evaluation | Remarks |
| Test Example 11 | Cocoa butter | 15 | Cabbage | 85 | 25 µm | Wet fine grinding of cabbage in liquid cocoa butter (bead mill) | 4 | 5 | 5 | 3 | The operability of the wet refining treatment is slightly poor but acceptable |
| Test Example 12 | Cocoa butter | 20 | Cabbage | 80 | 22 µm | Same as above | 4 | 5 | 5 | 4 | The operability of the wet refining treatment is somewhat troublesome |
| Test Example 13 | Cocoa butter | 25 | Cabbage | 75 | 18 µm | Same as above | 5 | 5 | 5 | 5 | - |
| Test Example 14 | Cocoa butter | 30 | Cabbage | 70 | 15 µm | Same as above | 5 | 5 | 5 | 5 | - |
| Test Example 15 | Cocoa butter | 40 | Cabbage | 60 | 12 µm | Same as above | 5 | 5 | 5 | 5 | - |
| Test Example 16 | Cocoa butter | 50 | Cabbage | 53 | 10 µm | Same as above | 5 | 5 | 5 | 5 | - |
| Test Example 17 | Cocoa butter | 60 | Cabbage | 54 | 8 µm | Same as above | 5 | 5 | 5 | 5 | - |
| Test Example 18 | Cocoa butter | 70 | Cabbage | 30 | 6 µm | Same as above | 5 | 5 | 5 | 5 | - |
| Test Example 19 | Cocoa butter | 75 | Cabbage | 25 | 4 µm | Same as above | 5 | 5 | 5 | 5 | - |
| Test Example 20 | Cocoa butter | 80 | Cabbage | 20 | 2 µm | Same as above | 5 | 5 | 4 | 4 | The taste is somewhat weak |
| Test Example 21 | Cocoa butter | 85 | Cabbage | 15 | 1 µm | Same as above | 5 | 5 | 3 | 3 | The taste is slightly weak but accepta ble |

As a result, it was found that the range of the content ratio of the plant material to the total of the solid fat and the plant material should be 15 mass% or more, and from the viewpoint of the intensity of taste and nutritional function, 20 mass% or more is more preferable, and 25 mass% is further preferable. Moreover, it was found that the upper limit should be 85 mass% or less, and from the viewpoint of easy operation of the wet fine grinding, 80 mass% or less is more preferable, and 75 mass% or less is further preferable.

### [Example 5] Verification of the impact of the means of the wet fine grinding

In Examples 1 to 4, the wet fine grinding of the plant material was performed by bead milling. Here, it was verified whether or not the same effects can be exhibited by the other methods shown in Table 5.

The results are shown in Table 5.

**[Table 5]**

| | Solid fat | | Plant material | | | Others | | Fine grinding method | Evaluation results | | | | |
|---|---|---|---|---|---|---|---|---|---|---|---|---|---|
| | Type | Amount blended (mass%) | Type | Amount blended (mass%) | Average particle diameter | Type | Amount blended (mass%) | | Appearance | Texture | Taste | Overall evaluation | Remarks |
| Test Example 22 | High-melting-point palm oil | 47 | Beet root | 47 | 18 µm | Sugar | 6 | Wet fine grinding of beet root and sugar in liquid high-melting-point palm oil (bead mill, circular) | 5 | 5 | 5 | 5 | - |
| Test Example 23 | High-melting-point palm oil | 47 | Beet root | 47 | 25 µm | Sugar | 6 | Wet fine grinding of beet root and sugar in liquid high-melting-point palm oil (roll mill, twice) | 4 | 5 | 5 | 5 | - |
| Test Example 24 | High-melting-point palm oil | 44 | Garlic | 44 | 7 µm | Salt | 12 | Wet fine grinding of beet root and sugar in liquid high-melting-point palm oil (bead mill, circular) | 5 | 5 | 5 | 5 | - |
| Test Example 25 | High-melting-point palm oil | 44 | Garlic | 44 | 12 µm | Salt | 12 | Wet fine grinding of beet root and sugar in liquid high-melting-point palm oil (roll mill, twice) | 5 | 5 | 5 | 5 | - |

As a result, it was found that it was possible to conduct the wet fine grinding not only with a bead mill (Test Examples 22 and 24), but also with a roll mill (Test Examples 23 and 25). Therefore, it was found that the wet fine grinding can also be performed by other wet fine grinding means.

### [Example 6] Preparation and verification of the porous plant-containing solid fat composition

Here, porous plant-containing solid fat compositions were prepared and verified. The porous plant-containing solid fat compositions were prepared by heating and redissolving the plant-containing solid fat composition prepared in Example 5, adding water thereto as shown in Table 6, then stirring, homogenizing, and freeze-drying. In addition, the preparation and evaluation of the samples were performed in the same manner as in Example 1. This was evaluated in the same manner as in Example 1.

The results are shown in Table 6.

**[Table 6]**

| | Solid fat + Plant material | | Water addition | Additional notes | Evaluation results | | | | |
|---|---|---|---|---|---|---|---|---|---|
| | Type | Amount blended (mass%) | Amount blended (mass%) | | Appearance | Texture | Taste | Overall evaluation | Remarks |
| Comparative Example 17 | Heated and liquefied finely ground plant material-containing hardened solid fat product prepared in Test Example 23 | 95 | 5 | Wet fine grinding of beet root and sugar in liquid high-melting-point palm oil (roll mill) | 5 | 5 | 5 | 2 | Too few pores to be considered porous |
| Test Example 26 | Same as above | 90 | 10 | Same as above | 5 | 5 | 5 | 3 | - |
| Test Example 27 | Same as above | 85 | 15 | Same as above | 5 | 5 | 5 | 4 | - |
| Test Example 28 | Same as above | 80 | 20 | Same as above | 5 | 5 | 5 | 5 | - |
| Test Example 29 | Same as above | 70 | 30 | Same as above | 5 | 5 | 5 | 5 | - |
| Test Example 30 | Same as above | 60 | 40 | Same as above | 5 | 5 | 5 | 5 | - |
| Test Example 31 | Same as above | 50 | 50 | Same as above | 5 | 5 | 5 | 5 | - |
| Test Example 32 | Same as above | 45 | 55 | Same as above | 5 | 4 | 3 | 4 | - |
| Test Example 33 | Same as above | 40 | 60 | Same as above | 5 | 3 | 3 | 3 | - |
| Comparative Example 18 | Same as above | 35 | 65 | Same as above | 5 | 2 | 5 | 2 | Slightly poor shape retention due to too many pores |

As a result, it was found that the amount of water added should be 10 mass% or more based on the total amount (mass) of the plant-containing solid fat composition in a liquid state, and that from the viewpoint of appropriate disintegration properties due to the porous state, the porous plant-containing solid fat composition can be prepared with more preferably 15 mass% or more water, and further preferably 20 mass% or more water. Moreover, it was found that the upper limit of the amount of water added should be 60 mass% or less, and from the viewpoint of appropriate shape retention, the porous plant-containing solid fat composition can be prepared with more preferably 55 mass% or less water, and further preferably 50 mass% or less water.

### [Example 7] Study No. 1 of the mechanism for developing the effects of the plant-containing solid fat composition of the present invention

In Examples 1 to 6, it was found that the plant-containing solid fat composition of the present invention had the properties of the effects of exceptional appearance, texture, and taste. Therefore, here, the mechanism of why these properties occur compared to the other methods shown in Table 7 (Control 1 and Control 2 in Table 7) was examined. In this case, the study was performed using a liquid oil which is liquid at 20°C, since it is difficult to study with a solid fat that hardens at room temperature.

Corn seeds and the flesh of pumpkin were selected as the raw materials, and subjected to ventilation drying at 70°C for 4 hours to obtain a dried product having a water content of 10% or less. This dried product was ground by a hammer mill and further coarsely ground by a dry mill. The average particle diameter of the coarsely ground dried powder was 20 µm for the corn seeds and 50 µm for the pumpkin flesh. The flavor and color of the coarsely ground powder were not much different compared to before the drying treatment.

20 mass% of this coarsely ground powder was mixed with 80 mass% of olive oil, which is a liquid oil, mixed well, and dispersed until uniform. Then, in order to prepare a finely ground plant material-containing liquid composition, a one-pass treatment was performed with a wet fine grinding machine, and the coarsely ground dried corn seed powder and dried pumpkin powder were subjected to a fine grinding in oil with olive oil, to prepare a finely ground plant material-containing liquid composition. This treatment resulted in an average particle diameter of about 10 µm for corn and 25 µm for pumpkin.

Next, a control for the finely ground plant material-containing liquid composition described above was prepared by further subjecting each of the coarsely ground powders of dried corn seeds and dried pumpkin to a dry grinding, mixing each at a ratio of 20 mass% with 80 mass% of olive oil, mixing well, and dispersing until uniform (Control 1).

20 mass% of the coarsely ground powder of dried corn seeds and dried pumpkin and 80 mass% of distilled water were mixed, and the mixture was stirred well and dispersed. Then, as a second control for the finely ground plant material-containing liquid composition, in order to prepare a control subjected to a fine grinding in water, the second control was prepared by performing a one-pass treatment with a wet fine grinding machine, and subjecting the coarsely ground dried corn seed powder and dried pumpkin powder to a fine grinding together with water in water (Control 2). This treatment resulted in an average particle diameter of 10 µm for corn and 25 µm for pumpkin.

Then, the characteristics of the finely ground plant material-containing liquid composition and the two controls were evaluated according to the following evaluation criteria. The evaluation (aroma, taste, color, physical properties, quality after storing at 40°C for 1 month) was qualitatively performed by six professional panelists after concertation, the overall evaluation was scored according to the following evaluation criteria by the six professional panelists while including the remarks, and the evaluation results were obtained by determining the weighted average (rounded off to the decimal point). The results are shown in Table 7.

### (Evaluation criteria 5: Overall evaluation)

- 5:: Excellent.
- 4:: Slightly excellent.
- 3:: Average.
- 2:: Slightly inferior.
- 1:: Inferior.

**[Table 7]**

| | | Test Example 34 | Comparative Example 19 | Comparative Example 20 | Test Example 35 | Comparative Example 21 | Comparative Example 22 |
|---|---|---|---|---|---|---|---|
| | | (Model for the present invention) | (Control 1) | (Control 2) | (Model for the present invention) | (Control 1) | (Control 2) |
| Method for preparing the finely ground plant material-containing liquid material | | Fine grinding in oil | Mixing in oil | Fine grinding in water | Fine grinding in oil | Mixing in oil | Fine grinding in water |
| Method for pretreating the plant material (average particle diameter) | | Dry coarse grinding (20µm) | Dry coarse grinding (20µm) | Dry coarse grinding (20µm) | Dry coarse grinding (50µm) | Dry coarse grinding (50µm) | Dry coarse grinding (50µm) |
| Plant powder | Coarsely ground corn seeds (mass%) | 20 | 20 | 20 | - | - | - |
| | Coarsely ground pumpkin flesh (mass%) | - | - | - | 20 | 20 | 20 |
| Liquid oil | Olive oil (mass%) | 80 | 80 | - | 80 | 80 | - |
| Water | Distilled water (mass%) | - | - | 80 | - | - | 80 |
| Preparation treatment of the finely ground plant material-containing liquid material | | Mixing and stirring in oil, followed by wet bead mill treatment (one pass) | Dry fine grinding, followed by mixing in oil and homogenization by stirring | Mixing and stirring in water, followed by wet bead mill treatment (one pass) | Mixing and stirring in oil, followed by wet bead mill treatment (one pass) | Dry fine grinding, followed by mixing in oil and homogenization by stirring | Mixing and stirring in water, followed by wet bead mill treatment (one pass) |
| Average particle diameter after preparation treatment | | 10 µm | 10 µm | 10 µm | 25 µm | 25 µm | 25 µm |
| Quality evaluation results of the finely ground plant material-containing liquid composition | Aroma | Remarkably strong from the middle to after taste, long-lasting lingering taste | Present from the first to the middle taste | Weak | Remarkably strong from the middle to after taste, long-lasting lingering taste | Present from the first to the middle taste | Weak |
| | Taste | Strong from the middle to after taste, lasting lingering taste | Slightly strong from the first to the middle taste | Only a bit of initial taste | Strong from the middle to after taste, lasting lingering taste | Slightly strong from the first to the middle taste | Only a bit of initial taste |
| | Color | Bright yellow | Bright yellow | Yellow-whitish | Bright orange | Bright orange | Yellow-whitish |
| | Physical properties | Smooth | Smooth, with solid-liquid separation after being left to stand at least several hours | Smooth | Smooth | Smooth, with solid-liquid separation after being left to stand at least several hours | Smooth |
| | Quality after storing at 40 °C for 1 month | No change | No change | Weakened flavor, browning | No change | No change | Weakened flavor, browning |
| | Overall evaluation | 5 | 2 | 1 | 5 | 2 | 1 |
| | Remarks | Compared to Control 1, the intensity of the aroma in the nose and the lingering is strong, quite excellent flavor | Significant solid-liquid separation, poor dispersion stability | Remarkably inferior, with both flavor and color being weak | Compared to Control 1, the intensity of the aroma in the nose and the lingering is strong, quite excellent flavor | Significant solid-liquid separation, poor dispersion stability | Remarkably inferior, with both flavor and color being weak |

As shown in Table 7, in the finely ground plant material-containing liquid composition prepared with the same method as the present invention (Test Examples 34 and 35), the straight and fresh flavor inherent to the plant material was remarkably strong and had excellent durability, compared to the method without finely grinding in oil (Comparative Examples 19 and 21), regardless of the plant material or the particle diameter after preparation. Comparative Examples 19 and 21 caused solid-liquid separation of the oil component and the plant particles, resulting in poor dispersion stability (see Figure 4-2). In addition, compared to the method of performing a fine grinding in water (Comparative Examples 20 and 22), the intensity of the flavor was incomparably strong (Comparative Examples 20 and 22 were weak) and the color was remarkably bright and excellent (Comparative Examples 20 and 22 had a whitish and slightly dull color, see Figure 4-1).

In particular, in the finely ground plant material-containing liquid composition prepared by the method of the present invention (Test Examples 34 and 35), the initial taste was slightly weak, but the development of the flavor from the middle to the after taste was remarkably strong, and felt as if the aroma diffused so powerfully from the oral cavity to the nasal cavity that the term "exploding" could be applied. Even after swallowing, the flavor was strong and lasted in the oral cavity and nasal cavity for a long time, which felt extremely preferable as a lingering taste.

Figures 4-1 and 4-2 show the finely ground plant material-containing liquid composition, which was prepared in Test Example 34 and Comparative Examples 20 and 19 shown in Table 7, after allowing it to stand at room temperature for 96 hours.

As a result, first, in the comparison of Test Example 34 and Comparative Example 20, there was no difference between Test Example 34 and Comparative Example 20 in that solid-liquid separation did not occur in both, and they were dispersed uniformly. The color was bright yellow in Test Example 34, whereas it was slightly whitish and a dull pale yellow in Comparative Example 20 (see Figure 4-1). The difference between the preparation methods of Test Example 34 and Comparative Example 20 was only that the solvent used in the wet fine grinding was oil or water. Therefore, it was considered that the difference of color was caused by the alteration of the pigment components during the fine grinding (in water) or by the difficulty to be extracted into the solvent (in water). That is, since Comparative Example 20 was a fine grinding in water, the alteration of the pigment components by oxidation with oxygen and by enzymes was considered, and it was also considered that the oil-soluble components did not exude. By contrast, with the fine grinding in oil of Test Example 34, oxidation by oxygen and enzymatic reaction did not occur, and it was thought to have led to the bright yellow coloring, along with the effect of promoting the extraction of the pigment components by the oil.

Next, in the comparison between Test Example 34 and Comparative Example 19, there was a remarkably great difference particularly in that solid-liquid separation occurred after the prepared finely ground plant material-containing liquid composition was allowed to stand. That is, Comparative Example 19 in which the wet fine grinding was not performed in oil exerted a remarkable solid-liquid separation, but poor dispersion stability (see Figure 4-2).

Therefore, next, the focus was brought to the manner in which the plant particles were present in the finely ground plant material-containing liquid composition.

### [Example 8] Study No. 2 of the mechanism for developing the effects of the plant-containing solid fat composition of the present invention

Here, the study was conducted by adding the finely ground plant material-containing liquid composition prepared by the same method as the preparation method in Example 7, except that 50 mass% coarsely ground corn seeds and 50 mass% olive oil were blended (As shown in Figure 5, Test Example 36: with fine grinding in oil, Comparative Example 23: no fine grinding in oil). Figure 5 shows these when allowed to stand at room temperature for 96 hours as in Example 7.

As a result, in the comparison of Test Example 36 and Comparative Example 23 in which the amount of plant particles was increased compared to Example 7, no solid-liquid separation was observed in Test Example 36, whereas solid-liquid separation was observed in Comparative Example 23 (see Figure 5). The differences in flavor, color, physical properties and the like other than solid-liquid separation in the comparison of Test Example 36 and Comparative Example 23 had the same tendencies as the results of Example 7. Therefore, it was found that the amount of the plant particles blended was not related to the properties exhibited by the finely ground plant material-containing liquid composition.

Next, 10 drops of the finely ground plant material-containing liquid composition of Test Example 34 and Comparative Example 19 prepared in Example 7 and of the finely ground plant material-containing liquid composition of Test Example 36 and Comparative Example 23 prepared in Example 8 were each dropped in 20 mL of distilled water, followed by an ultrasonic treatment of the whole vessel for 30 minutes, and were then observed after being allowed to stand for 18 hours.

They are shown in Figures 6-1 and 6-2.

As a result, in the Comparative Examples in which the wet fine grinding was not performed (Comparative Example 19 and Comparative Example 23), regardless of the blend ratio of the plant particles and the oil, the oil component separated and floated on the water surface as oil droplets (transparent oil droplets, or a transparent oil layer adhering all around the vessel wall), while the plant particles absorbed water and settled at the bottom of the vessel (yellow precipitate visible through the surface), whereas with the finely ground plant material-containing liquid composition (Test Example 34 and Test Example 36), not only the dropped plant-containing oil droplets were not easily disintegrated by the ultrasonic treatment, but also the plant particles and the oil component in the dispersed finely ground plant material-containing liquid composition did not separate, and tiny plant particle-containing oil droplets floated on the water surface (see Figures 6-1 and 6-2).

For this reason, it was thought that in the plant particles which were subjected to a wet fine grinding in the oil of the present invention, the treatment allowed the oil component to infiltrate the surface layer of the plant particles, and that the surface was strongly coated with the oil component. This was thought to be because kneading of the plant particles and the oil also occurs when the plant particles are subjected to a fine grinding together with the oil component in oil. That is, this strongly suggested that this difference is related to the differences of phenomena between the Comparative Examples and the Test Examples.

### [Example 9] Study No. 3 of the mechanism for developing the effects of the plant-containing solid fat composition of the present invention

Therefore, here, the manner in which the plant particles and the oil component were present in these finely ground plant material-containing liquid compositions was further observed in detail, and it was studied which structural differences caused the differences of phenomena in the Comparative Examples and the Test Examples.

Here, as the finely ground plant material-containing liquid composition, the liquid composition containing finely ground pumpkin prepared in Example 7 was selected. This is because pumpkins have a larger particle diameter than corn seeds and are considered suitable for observation with an optical microscope. In the liquid composition containing finely ground pumpkin, the difference between the phenomena occurring in the composition that was subjected to the above-mentioned wet fine grinding in oil (Test Example 35) and the one that was not (Comparative Example 21) is the same as the difference in the corn seeds described above.

Therefore, for Test Example 35 in which the pumpkin was subjected to a wet fine grinding in oil and Comparative Example 21 in which the pumpkin was not subjected to a wet fine grinding, the manner in which the plant particles and the oil component was present in the prepared finely ground plant material-containing liquid composition was observed in detail with an optical microscope (500x magnification) via prepared slides in which they were adjusted to the same thickness.

Diagrams showing the manner in which the plant particles and oil component are present in the finely ground plant material-containing liquid composition, as observed by an optical microscope, are shown in Figures 7-1 and 7-2.

As a result, the finely ground plant material-containing liquid composition of Comparative Example 21, which was not subjected to a wet fine grinding in oil, showed a clear boundary between the edges of the plant particles (see Figure 7-1), and it was therefore assumed that the affinity with the oil component was weak (when the affinity is strong, the boundary should be blurred due to the presence of the oil component). The fact that the surface of the plant particles was relatively sharp with irregularities suggests that this is related to the absence of fine grinding in oil.

By contrast, in the finely ground plant material-containing liquid composition of Comparative Example 35, which was subjected to a wet fine grinding in oil, the boundary between the edges of the plant particles was blurred (see Figure 7-2), and it was therefore assumed that the affinity with the oil component was strong. Furthermore, the fact that the surface of the plant particles was relatively smooth and round was considered to be due to the impact of the fine grinding in oil.

That is, it was found that the fine grinding in oil allowed the plant particles in the oil to be kneaded with the oil component during the fine grinding with the oil component, which allowed the oil component to infiltrate the plant particles and impart a smooth and round surface, thus indicating that they were easy to be encapsulated by an oil film.

### [Example 10] Study No. 4 of the mechanism for developing the effects of the plant-containing solid fat composition of the present invention

In Example 9, it was found that the fine grinding in oil affected the manner in which the plant particles and oil component were present in the finely ground plant material-containing liquid composition. Next, it was examined how this manner of presence relates to the effects of the present invention.

As in Example 9, for Test Example 35 in which the pumpkin was subjected to a wet fine grinding in oil, the manner in which the plant particles and the oil component were present in the finely ground plant material-containing liquid composition dispersed in water, and in the finely ground plant material-containing liquid composition dispersed in saliva was observed in detail with an optical microscope (500x magnification) via prepared slides in which they were adjusted to the same thickness.

Diagrams showing the manner in which the plant particles and oil component are present, as observed by an optical microscope, are shown in Figures 8-1 and 8-2.

As a result, it was found that when the liquid oil containing the finely ground plant material of the present invention is mixed and dispersed in distilled water, the finely ground plant particles have the oil component infiltrating into the tissue pieces (the plant particles are stained in a dark color) and the surroundings are thickly coated with an oil film (the surroundings of the plant particles are darkly colored with a blurry outline) (see Figure 8-1).

By contrast, when the finely ground plant material-containing liquid composition was mixed and dispersed in saliva collected from a human, the finely ground plant particles appeared to be disintegrated (the outline of the plant particles had a circular shape with breaks). In addition, the oil film perceived in distilled water was hardly perceived (the blurred outline around the plant particles was thin and the staining was weak), or part of it had breaks (weak staining spots), indicating that the oil film had faded away or ruptured (see Figure 8-2) .

To compare the difference between the case where the finely ground plant material-containing liquid composition is mixed with distilled water and the case where it is mixed with saliva (composition: distilled water or saliva = mass ratio of 1:50), as saliva is known to contain enzymes such as amylase and lipase, it was considered that when the finely ground plant material-containing liquid composition came into contact with saliva, the lipase and the like in saliva acted on the oil/fat-coated plant particles, and the plant particles, whose surface was coated with the oil/fat and were isolated from water, came into contact with the water of saliva due to decomposition of the surrounding oil/fat film. Since these plant particles contained a large amount of easily absorbable dietary fiber such as pectin, it was considered that they absorbed water, swelled, increased in volume, and enlarged and collapsed from the inside. This suggested that the plant particles became even smaller and the surface area increased, making them more susceptible to the action of lipase and the like, and the oil/fat film decomposition due to lipase and the like and the synergistic action between the swelling due to the absorption of water of the plant particles and the collapse from the inside made the plant particles extremely fine one after another, which released at once the straight and fresh aroma components and nutritional and health functional components inherent to the plant material, which were encapsulated inside the plant particles, into the oral cavity and nasal cavity.

The above-described water absorption action of the plant particles in which the oil/fat film had collapsed was not only speculation. When one actually ingests the finely ground plant material-containing liquid composition of the present invention, the initial taste was slightly weak, but from the middle to the after taste, the taste was rapidly and strongly felt, which supports the fact that it went through the action of lipase and the like. Furthermore, this is supported by the fact that the finely ground plant material-containing liquid composition felt on the tongue like it strongly absorbed saliva in the oral cavity.

It was considered that the action of absorbing water by the plant particles on the tongue in the oral cavity caused to thin the water film between the taste receptors in the oral cavity and the taste substances, to promote the diffusion of the taste components from the plant particles to the water present in the oral cavity by connecting the tongue and the plant particles with the water film, and to promote the contact and reception of the taste substances with the taste receptors, which produced the effect of making the taste remarkably strongly and durably felt.

Similarly, it was considered that the aroma components were released from the plant particles at once into the oral cavity through a similar process, and along with the volatilization effect due to body temperature, this produced the effect of immediately passing through the nasal cavity and feeling aroma which was extremely strong and long-lasting in the oral cavity and nasal cavity.

It was considered that not only the aroma components but also the substances having a nutritional and health function such as vitamins and pigment components were also released in the same manner, and since these were stably maintained in oil, not only the amount of watersoluble components absorbed, of which the structural stability was conventionally difficult to maintain due to the oxidation and action of enzymes, was improved, but also the absorption ratio in the intestinal tract of the oil-soluble components, which conventionally had a low absorption ratio when used alone, was improved since they could be taken simultaneously with the oil/fat, thereby also exhibiting the effect of promoting the absorption of the nutritional and health functional components such as vitamins and pigments inherent to the plant.

As described above, the studies of Examples 7 to 10 described above elucidated the mechanism for developing the effects of the plant-containing solid fat composition of the present invention, that is, to provide an improved appearance in which appearance defects such as overall whitening or local mottling did not occur, color was well development by the plant-derived pigments, and a uniform and beautiful appearance was provided; to provide an improved texture having physical properties in which the crystals had a dense and highly continuous structure, and brittleness and easy crumbling and roughness did not occur and a high shape retention and a smooth in-mouth melting feeling were provided; and the effects of the present invention resulting from the plant-containing solid fat composition of the present invention dissolving in the oral cavity, that is, to have an improved taste, in which the straight and fresh flavor of a fresh plant was strong, and not only the initial taste of the flavor, but also the middle and after tastes of the preferable flavor in the oral cavity were provided, and the middle and after tastes lasted for a long time after swallowing; and an improved nutritional function by containing a large amount of nutritional and health functional components, such as vitamins and pigment components, and in which the nutritional and health functional components were easily absorbed.

## Claims

1. A method for producing a plant-containing solid fat composition comprising a finely ground plant material in a solid fat, the method comprising:
subjecting plant particles to a fine grinding in the presence of a solid fat liquefied with heating until an average particle diameter of the plant particles reaches 25 µm or less, and then hardening the solid fat by cooling.

2. The method according to claim 1, wherein a surface of the finely ground plant material is coated with the solid fat and a surface layer of the finely ground plant material is infiltrated by the solid fat, by the fine grinding.

3. The method according to claim 1 or 2, wherein a ratio of the finely ground plant material to a total of the solid fat and the finely ground plant material is 15 mass% or more and 85 mass% or less.

4. The method according to any one of claims 1 to 3, wherein the fine grinding is performed by a wet bead mill treatment and/or a roll mill treatment.

5. The method according to any one of claims 1 to 4, wherein the solid fat is one or more selected from the group consisting of cocoa butter, coconut oil, palm oil, palm kernel oil, beef tallow, ghee, lard, and butter.

6. The method according to any one of claims 1 to 5, wherein water is added to a mixture of the finely ground plant material after the fine grinding and the liquefied solid fat, followed by homogenization, then the solid fat is hardened by a freeze-drying treatment.

7. The method according to claim 6, wherein an amount of water added based on a total of the solid fat and the finely ground plant material is 10 mass% or more and 60 mass% or less.

8. The method according to claim 6 or 7, wherein the solid fat is hardened by the freeze-drying treatment so as to form a porous structure.

9. A plant-containing solid fat composition produced by the method according to any one of claims 1 to 8.

10. A plant-containing solid fat composition, wherein a surface of a finely ground plant material having an average particle diameter of 25 µm or less is coated with a solid fat and a surface layer of the finely ground plant material is infiltrated by the solid fat.

11. The plant-containing solid fat composition according to claim 10, wherein a ratio of the finely ground plant material to a total of the solid fat and the finely ground plant material is 15 mass% or more and 85 mass% or less.

12. The plant-containing solid fat composition according to claim 10 or 11, which has a porous structure.

13. A method for improving an appearance and taste of a plant-containing solid fat composition comprising a finely ground plant material in a solid fat, the method comprising:
subjecting plant particles to a fine grinding in the presence of a solid fat liquefied with heating until an average particle diameter of the plant particles reaches 25 µm or less, and then hardening the solid fat by cooling.

14. The method according to claim 13, wherein a surface of a finely ground plant material is coated with the solid fat and a surface layer of the finely ground plant material is infiltrated by the solid fat, by the fine grinding.
